Europäisches Patentamt

European Patent Office

Office européen des brevets

(11) Publication number: **0 169 071**
**B1**

(12) **EUROPEAN PATENT SPECIFICATION**

(45) Date of publication of patent specification: **23.01.91**

(21) Application number: **85305128.2**

(22) Date of filing: **18.07.85**

(51) Int. Cl.⁵: **G 01 N 1/00, G 01 N 35/06**

(54) **Apparatus and method for detecting liquid penetration by a container used for aspirating and dispensing the liquid.**

(30) Priority: **19.07.84 US 632516**

(43) Date of publication of application:
**22.01.86 Bulletin 86/04**

(45) Publication of the grant of the patent:
**23.01.91 Bulletin 91/04**

(84) Designated Contracting States:
**DE FR GB**

(56) References cited:

**PATENT ABSTRACTS OF JAPAN, vol. 6, no. 51
(P-108)929r, 6th April 1982; & JP-A-56 164 958**

**PATENT ABSTRACTS OF JAPAN, vol. 8, no. 171
(P-293)1608r, 8th August 1984; & JP-A-59 65 768**

**PATENT ABSTRACTS OF JAPAN, vol. 8, no. 157
(P-288)1594r, 20th July 1984; & JP-A-59 52 759**

(73) Proprietor: **EASTMAN KODAK COMPANY (a
New Jersey corporation)
343 State Street
Rochester New York 14650 (US)**

(72) Inventor: **Jessop, Thomas Clifton
901 Elmgrove Road
Rochester New York 14650 (US)**
Inventor: **Nelson, Raymond Larter
901 Elmgrove Road
Rochester New York 14650 (US)**
Inventor: **Whitcomb, Rodney John
901 Elmgrove Road
Rochester New York 14650 (US)**

(74) Representative: **Phillips, Margaret Dawn et al
Kodak Limited Patent Department Headstone
Drive
Harrow, Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the aspiration of liquid into a container from which it is dispensed. More specifically, it relates to the detection of when it is appropriate to commence such aspiration.

Liquid dispensers have been used in analyzers for the detection of the concentration of liquid analytes using as analysis means, test elements that contain within themselves the necessary reagents to permit such detection. Examples of such analyzers are described in U.S. Patent Nos. 4,287,155, issued September 1, 1981, and 4,340,390, issued July 20, 1982. Examples of such test elements appear in U.S. Patent Nos. 3,992,158, issued November 16, 1976; 4,053,381, issued October 11, 1977; and 4,258,001, issued March 24, 1981. The conventional method for dispensing liquid onto such test elements using such analyzers has been to aspirate test liquid from a relatively large container, into a dispensing container. The dispensing container is then moved to a position immediately above such a test element, and a fraction (e.g., 10 µl) of the aspirated liquid is dispensed. The dispensing container is fluidly connected, in such analyzers, to a pressurizing means that generates both the operative partial vacuum needed to aspirate the needed amount of liquid into the container, and the partial pressure operative to dispense that aspirated liquid, in fractional amounts, onto a plurality of test elements. A pressure transducer is also conventionally included to ascertain the pressure within the container, so as to detect the occurrence of the desired dispensing event versus a failure to dispense A microprocessor generally is used to control the apparatus in response to the conditions sensed.

Examples of prior conventional analyzers are shown in U.S. patent No. 4,452.899, and Japanese Kokai 59/52759, published 3/27/84. The disclosure of the aforesaid U.S. patent includes a motor for raising and lowering the dispensing container, removably mounted on a probe, relative to the large container that supplies the test liquid. Such motors usually are preset to move the dispensing container a fixed distance into such large containers. Such analyzers have functioned well when the level of the liquid within such large containers has been generally constant, and therefore predictable. However, usually the level is not constant. That is, although the large containers usually have a prescribed protocol that governs their filling, in the case where the dispensing apparatus is used for clinical analysis of body fluids, operators find it more convenient to overfill. Even the overfill is not necessarily constant. Because of the lack of predictability, the motor is preset to accommodate the lowest possible liquid level as the "nominal" liquid level. Unfortunately, this means that the exterior of the dispensing container becomes excessively wetted with the test liquid in those containers having more, and especially those with much more, than the minimum volume providing such lowest level. It has been found that such excessive wetting tends to encourage perfusion during subsequent dispensing. As used herein, "perfusion" means movement of the liquid being dispensed, up the exterior surface of the dispensing container, rather than down onto the test element. As is readily apparent, such perfusion prevents some or all of the desired test liquid from reaching the test element.

The above-mentioned Japanese Kokai 59[1984] 52759 describes an approach to the detection of the penetration of the liquid-air interface. The aspirating and dispensing device continually aspirates as it moves toward the air-liquid interface. When the device encounters the interface, the change in pressure is registered in the transducer, which signals a controller that penetration has occurred. A timer then times when the aspirating cycle of the pump is to stop.

Such an approach is objectionable for two reasons. First, *any* drop in the pressure will trigger the controller, because no threshold value is set that the pressure drop has to exceed, and no comparator means are included for comparing the pressure drop against a threshold reference value. What this means is that sudden external events that cause a pressure drop (e.g., opening or closing of a door) will trigger the mechanism, and the timer will improperly start the timing of "aspiration" even though no aspiration is taking place.

The second objection is that aspiration to sense that air-liquid interface is done while the device advances toward that interface. Such a procedure renders it impractical to use a piston pump, since it is likely that, by the time the interface is encountered, there is insufficient travel room left for the piston to withdraw fully for complete aspiration. Although the pump could be reversed to blow air into the liquid until the piston has recovered enough travel to permit aspiration, it is usually undesirable to do this as the air bubbles can alter the amount of analyte in the liquid that is to be analyzed following dispensing. For example, $CO_2$ analyte would be affected. The problem is further compounded when a threshold is also being used, as described above, to exclude the unwanted detection of exterior pressure changes. That is, to avoid running out of pump travel, a fixed increment of, e.g., six half-steps of the stepper motor driving the piston, could be used repeatedly to cause some aspiration. If this is done while the probe is advancing towards the unknown location of the liquid 4 or 5 of the 6 steps could have occurred before penetration, leaving only 1 or 2 steps after penetration. Such few steps are unlikely to be enough to generate a sufficient drop in pressure such as will overcome the threshold value against which the signal is compared. As a result, the actual penetration event will not be discovered until 4 more steps of the motor occur, so that the probe must penetrate an extra distance. The intent of the operation is to *avoid* such extra wetting of the probe, so that detection while continuously advancing is unacceptable.

Thus, the problem to be solved by this invention is to provide a mechanism and a method for accurately detecting the penetration of an air-liquid interface that can be at any one of many levels, without being affected by external events that generate atmospheric changes in pressure, and without causing an unacceptable amount of air to be bubbled into the liquid.

In accordance with the present invention there is provided apparatus for aspirating and dispensing a liquid comprising a probe for removably mounting a container thereon, the container having an aspirating and dispensing aperture; pressurizing means fluidly connected to said probe for generating an operative pressure differential relative to atmospheric pressure within said mounted container; moving means for advancing said probe and said mounted container toward, and away from, a nominal liquid level location; and a control system; characterized in that said control system comprises

a) means for controlling the advance of said probe so as to move repeatedly in increments, each increment being separated from the next by a period of rest,

b) means for actuating said pressurizing means during said rest periods only to generate a pressure differential in said mounted container relative to atmospheric pressure which is sufficient to indicate whether said container aperture is closed by the liquid,

c) means for detecting and signalling the pressure produced within said container by said pressure differential; and

d) means for comparing the signalled pressure with a reference value determinative of the presence of liquid in said container aperture.

In accordance with the present invention there is also provided a method for detecting penetration of a liquid through an air-liquid interface by a dispensing container of aspirating and dispensing apparatus which comprises a probe for removably mounting a container thereon, the container having an aspirating and dispensing aperture; pressurizing means fluidly connected to said probe for generating an operative pressure differential relative to atmospheric pressure within said mounted container; moving means for advancing said probe and said mounted container toward, and away from, a nominal liquid level location; and a control system for controlling said pressurizing means consistent with the location of said mounted container;

characterized in that said method comprises the steps of

a) controlling the advance of said probe to repeatedly move towards the liquid in increments, each increment being separated from the next by a period of rest,

b) actuating said pressurizing means during said rest periods only to generate a pressure differential in said mounted container relative to atmospheric pressure which is sufficient to indicate whether said container aperture is closed by the liquid,

c) detecting and signalling the pressure produced within said container by said pressure differential; and

d) comparing the signalled pressure with a reference value determinative of the presence of liquid in said container aperture.

Thus it is an advantageous feature of the invention that no additional air supply or sensing probe is required besides the pressurizing means and probe already used to aspirate and then dispense the aspirated liquid, to detect in a controlled manner for disposable dispensing containers, whether penetration of the liquid by the dispensing container has occurred.

The present invention will now be described by way of example with reference to the attached drawings, in which:

Fig. 1 is a fragmentary perspective view of a dispensing apparatus with which the method of the invention can be practiced;

Fig. 2 is a fragmentary, partially schematic view illustrating the steps of the method, wherein, parts and positions are not shown to scale;

Fig. 3 is a schematic illustration of a microprocessor useful as a control means;

Fig. 4 is an example of a signal trace generated by a transducer when carrying out the steps of the invention; and

Fig. 5 is a flow chart for programming the control means of the described apparatus to carry out the invention.

The invention is particularly useful in colorimetric and potentiometric assays using analyzers and dried test elements of the type described in the above-noted patents. In addition, the invention is useful in any dispensing apparatus or method which aspirates liquid after moving the dispensing container from the atmosphere into a liquid phase, regardless of the steps that follow the dispensing of the aspirated liquid.

Terms such as "up", "down", "lower", "vertical", "horizontal", and "bottom", as used herein refer to the orientation of parts when the apparatus is positioned in its customary position of use.

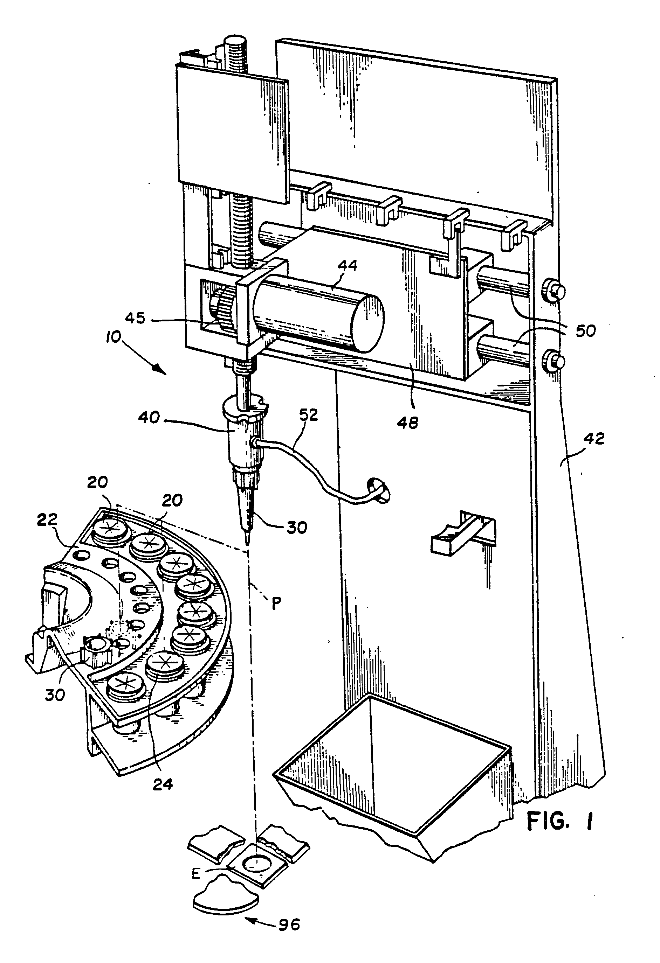

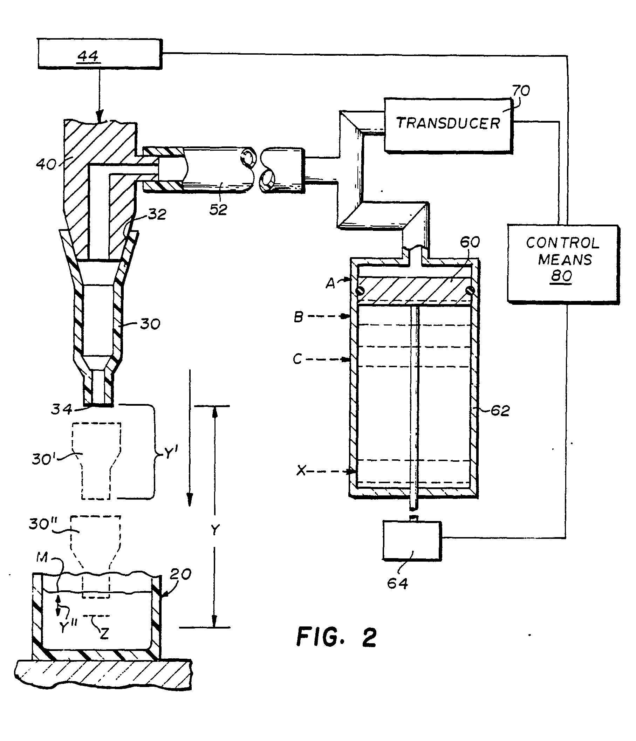

A portion of a preferred dispensing apparatus 10 is illustrated in Figs. 1 and 2. A plurality of relatively large sample containers 20 is provided in a tray 22, which also supports removable, disposable dispensing containers 30. The containers 30 have, Fig. 2, a larger aperture 32 at one end to mate with a probe 40, and a smaller aperture 34 at the opposite end for aspirating and dispensing. Each of containers 20 is preferably provided with a pierceable closure or cap 24. Fig. 1. The probe 40 is mounted for vertical and horizontal movement on a frame 42, such movement being provided respectively by a motor 44 and gear 45, and by a car 48 carrying the probe 40 horizontally on rails 50. Motor 44 can be a stepper motor or a D.C. motor with feedback control. The combined movement of the car and probe is effective to carry the probe within the plane noted as "P", Fig. 1.

A pressure line 52 provides a partial vacuum or a partial pressure, relative to atmospheric, to a dispensing container 30 picked up by the probe. The pressure or vacuum is provided by means such as a piston 60 and piston chamber 62, Fig. 2, driven by appropriate motor means 64. For example, movement of piston 60 from position "A" down to position "X" creates the operative partial vacuum that aspirates the liquid from container 20 into container 30 at the appropriate time. A pressure transducer 70 is used to sense the pressure in container 30, for example to determine when proper dispensing of the liquid out of container 30 occurs.

Alternatively, piston chamber 62 and its piston can be part of probe 40 so as to move up and down with the probe.

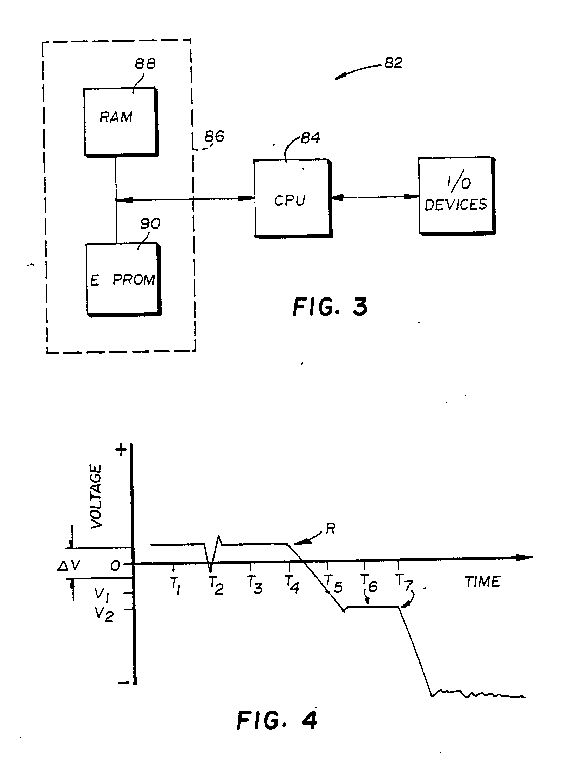

Appropriate control means 80 are provided to coordinate the actuation of motor 44 and motor 64, in response to conditions sensed by e.g., transducer 70. Control means 80 can comprise a microprocessor or hard-wired logic circuits. Most preferably, it includes a microprocessor 82, Fig. 3, particularly in light of the programming discussed hereinafter. As is conventional, such a microprocessor comprises a central processing unit 84, for example, an Intel 8086 chip, and memory unit 86 comprising one or more RAM's 88 and optionally one or more E PROM's 90. The microprocessor preferably is also wired to standard input/output devices, as shown, if the dispensing apparatus is part of a complete analyzer.

In accord with one aspect of the invention, the aforesaid apparatus is used as follows to detect the penetration of liquid meniscus M. Fig. 2, by the aperture 34 of container 30: Assume the total distance from aperture 34 to a point that will always penetrate the liquid (the minimum fill) is initially dimension Y. (This dimension is obtained with container 30 already penetrated through any cap on container 20, Fig. 1.) While container 30 is still at atmospheric pressure, the reference value needs to be established. This can be done two different ways: the signal generated by the pressure transducer 70 before motor 64 is activated can be taken as the value indicative of atmospheric pressure, since in fact container 30 and tube 52 are in fluid contact both with the atmosphere and transducer 70. Or alternatively, while container 30 is still at atmospheric pressure because the container is still at separation dimension Y, piston 60 is moved from the solid position shown as "A", Fig. 2, to the first dotted position shown as "B" to generate a partial vacuum that is sufficient, if liquid were interfaced with aperture 34 of container 30, to generate a signal indicative of equilibrium pressure of such liquid. (As used herein, "equilibrium" refers to the liquid meniscus formed in the apparatus being stationary.) The partial vacuum so generated is used to generate a reference signal from transducer 70 that is indicative of no liquid having been encountered, since the first test is by definition at atmospheric pressure. Next, motor 44 is activated to advance container 30 a fraction Y' of dimension Y, for example 24% of that dimension. Practically, Y'/Y is between about 1/5 and 1/3. Motor 44 is stopped by control means 80, and motor 64 activated again to move piston 60 from position B to position C. The amount of partial vacuum so generated need not be, but preferably is, the same as in moving from position A to B. A signal is again produced by transducer 70, and that signal is compared to the reference signal previously generated. If there is no difference greater than a predetermined threshold amount (to accommodate noise), then the liquid meniscus M still has not been penetrated. This is represented by container position 30'. Fig. 2.

The aforementioned incremental advance of the probe, followed by a fractional partial vacuum being drawn by the piston, is repeated until either a) a transducer signal is generated at a new level that exceeds the predetermined threshold value, thus indicating the penetration of meniscus M (container 30'' in Fig. 2), or b) the increments advanced exceed a safety factor, m. That is, eventually piston 60 will advance to position X in chamber 62, and insufficient withdrawal of the piston will remain to permit aspiration of the liquid once the liquid is encountered. To prevent this from happening, if the liquid is not sensed after a prescribed number of attempts, either piston 60 is reset to its position A or the probe is lowered the remaining portion of dimension Y presumed to be effective to penetrate the liquid at its nominal level. The use of a transducer signal that exceeds the threshold value to sense the liquid penetration is based upon the known principle that the resistance of a column of liquid to a partial vacuum is significantly different than the resistance provided by air.

By way of further explanation, the partial vacuum needed to sense for liquid penetration, that is, that which is sufficient to generate a signal indicative of the equilibrium pressure of any present liquid, depends upon a number of well-known factors which include: the dimensions of container aperture 34, the surface tension of the liquid, the contact angle at the liquid-container interface, and the corners encountered by the liquid entering the container. The measurement of the pressure is also affected by the presence of a transient and a steady state component. The transient component has a decreasing pressure profile with a time constant that is a function of the liquid viscosity and of the resistance to flow of the liquid within aperture 34. The amplitude of the transient will be a function of the ratio of the change in volume to the total internal air volume. The maximum value of the steady state component will be a function of the contact angle at the liquid-container interface and the internal radius 7f the container opening at such interface. The contact angle is a characteristic of the liquid/container material combination. The more hydrophobic the material of the container, the greater the contact angle and the greater the equilibrium pressure generated by the presence of liquid in aperture 34. Preferably, the pressure measurement is made at time, after the volume change, which is selected to give the most consistent readings for the variety of liquids to be encountered by the dispensing apparatus. With hydrophobic container materials, most liquids will produce a large, stable equilibrium pressure reading. Liquids with low contact angles may be read shortly after the volume change at a time much longer than the settling time of the air component of the transient but well before the end of the liquid component of the transient.

It will be readily evident that more than the vacuum needed to produce an "indicative" signal can be used, but that such excessive vacuums are less desirable because, a), they use up more of the pump volume, and b) they tend to produce a longer transient signal. For most biological liquids of interest, the partial vacuum sufficient to produce the indicative signal is a fraction only of the operative partial vacuum used to initiate aspiration. For a particular set of container and liquid parameters, it has been found, for example, that the partial vacuum to produce the "indicative" signal occurs at about 1/5 the level of vacuum used to initiate aspiration of the liquid into that container. As used herein, "indicative" means, capable of being detected as an unambiguous event.

When the transducer signal indicates liquid penetration, motor 44 is activated one more time, to prepare container 30 for aspiration. Specifically, the motor advances aperture 34 of container 30 further (distance $Y''$) into the liquid to position Z. The amount of advance is the amount needed to be certain that, during aspiration, aperture 34 still remains below meniscus M. Otherwise, there could be insufficient liquid above aperture 34 to be certain the liquid is aspirated without any air bubbles.

Thereafter, piston 60 is withdrawn to position X, Fig. 2, causing aspiration of the liquid into the container.

Probe 40 is then vertically withdrawn from container 20 and car 48 pulled back so that container 30 is vertically aligned with, e.g., a test element E held by suitable holding means 96, Fig. 1. Container 30 is then lowered until the liquid can be dispensed onto the test element E. Dispensing occurs from the operative partial pressure generated by moving piston 60 from position X toward position A. preferably in 10 μl steps, each step for a separate test element.

The procedure of activating the piston 60 to sense for liquid only when container 30 is not advancing, is preferred because the sensing of the liquid penetration is more complex if done *while* container 30 is advancing towards the liquid.

Fig. 4 is a representative signal produced by a transducer 70 when practicing the invention. In this case, only fractional partial vacuums were used to sense for the penetration event, that is, piston 60 was moved stepwise away from position A towards position X. Container 30 was constructed in accordance with U.S. Patent No. 4,347.875, issued September 7, 1982, with an inside diameter of aperture 34 that was about 500 μm. In the trace, time $T_1$ represents the time at which the voltage signal was read while the container was at atmospheric pressure, to establish a reference value R. Or alternatively, that value can be read at time $T_3$, the steady state condition after the first partial vacuum is taken by moving at time $T_2$ piston 60 from position A to position B. The trace indicates a slight transient change in pressure when piston 60 moves at time $T_2$. The microprocessor 82 subtracted from voltage R a predetermined threshold value $\triangle V$, here about 100 mv. The threshold value $\triangle V$ was set to exceed the transient portions of the signal noted above. Additionally, it also was set to exceed the noise created by pressure changes arising from extraneous events. For a test signal to be representative of the condition of air-liquid interface penetration, this $\triangle V$ had to be exceeded. At time $T_3$, motor 44 was activated to move container 30 an incremental distance Y' towards the liquid. At time $T_4$, piston 60 was moved to position C, and in fact the signal dropped well beyond the threshold value $\triangle V$, indicating penetration had occurred. Preferably, the steady state value $V_2$ is read at time $T_6$, as in Fig. 4, but with the proper selection of $\triangle V$, the increasing signal producing at time $T_5$ a transient value $V_1$ is also useful. That is, any value $V_1$ that negatively exceeds $\triangle V$ can be used to trigger the event of liquid penetration. After time $T_6$, probe 40 advanced the preset distance $Y''$ described above, and at time $T_7$, aspiration commenced.

The rate at which the condition of aperture 34 is sensed, and the rate of advance of probe 40 towards the liquid, are not critical, and are a function of the length of time available for a given sample test. By way of example, the total time for the iterative sensing of penetration and of moving the probe, up to the point were piston 60 is activated to aspirate the liquid, can be 800 millisec. Conventional stepper motors are available to cause the probe to advance in steps of 1/8" toward the liquid with each step taking only 100 millisec. The time needed to form a fractional partial vacuum or fractional partial pressure and to allow the transducer to generate a pressure signal is about 50 millisec. Thus, 5 such iterations can be done within the allotted 800 millisec. Alternatively, a longer time can be set aside with more or fewer iterations.

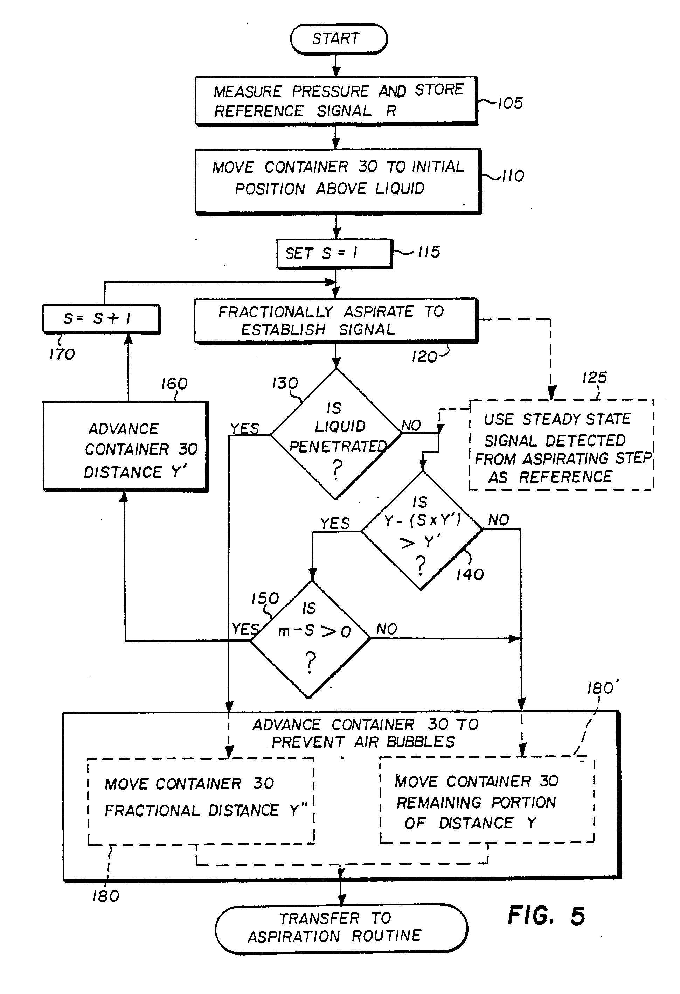

It will be appreciated that control means 80 is programmed or hard-wired to provide the timing described above. Fig. 5 is a flow chart that is useful in programming microprocessor 82, using conventional programming techniques. Specifically, the first step 105 is preferably to read the transducer signal while the container 30 is at atmospheric pressure, and storing the read value as reference R. The next step 110 is to move container 30 to an initial position at distance Y above the minimum level of liquid. Fig. 2, by activating motor 44. (Distance Y is subject to variations based upon the dimensions of container 20.) Such initial position is usually a location wherein container 30 has pierced the cap 24, Fig. 1, of the container 20. Next, step 115, S is set equal to 1. In step 120, motor 64 is activated (e.g., 12 half steps) to fractionally aspirate to generate a signal through the pressure sensing by the pressure transducer. If the reference R has not been read as step 105, then alternative step 125 is followed to obtain R. That is, the signal so generated by step 120 is selected, step 125, to be the reference signal ("R", Fig. 4) because it has been generated while the container is known to be at atmospheric pressure. If alternative step 125 is followed, then the program stores the reference value "R" and goes directly to step 140. Otherwise, step 130, the program tests to see if the liquid has been penetrated. If the answer is negative, then container 30 is ready to advance a distance Y'. Fig. 2. if there remains a multiple greater than 1 of Y' left in the distance container 30 has to travel to completely traverse dimension Y. To test this, the microprocessor queries in step 140 the relationship $Y - (S \times Y') > Y'$. If the answer is yes, the microprocessor further queries, step 150, whether m-S >O, where m is the maximum number of fractional aspirations, discussed above, that has been predetermined to be safe and still have sufficient volume left in chamber 62. Fig. 2, to do the operative aspiration of the liquid. For example, m can =4. If step 150 is answered yes, then motor 44 is activated, step 160, to advance container 30 a distance Y' (for example, by advancing 66 half-steps). The loop then returns to step 120 via step 170 for the next iteration of the process.

Returning to step 130, if that query is answered in the positive, then the program exits from the aforedescribed loop. Preferably, an additional step 180 is included to advance container 30 a distance Y'' to position Z, Fig. 2, prior to aspiration, as described above, to prevent air bubbles from being drawn in during aspiration.

The other route out of the loop occurs if the query of either step 140 or 150 is answered in the negative. The loop is exited and a preferred additional step 180' is to advance or move container 30 the remaining portion of distance Y to position it at a location presumed to penetrate the liquid at a depth that ensures aspiration will occur without drawing in air bubbles.

Alternatively, step 180 can be modified to occur in stages as part of the aspiration routine which follows. That is, the aspiration step can proceed fractionally with further fractional advances of the container into the liquid. Thus, the aspiration can proceed by motor 64 and piston 60 withdrawing a portion only of the desired liquid, e.g., for 10 half-steps, followed by motor 44 advancing container 30 by a small amount, e.g., 1 half-step. Then, motor 64 withdraws piston 60 another 10 half-steps, and motor 44 advances 1 half-step etc., until all of the required liquid has been aspirated. As will be readily apparent, the amount of advance of container 30 is adjusted per amount of aspiration, based upon the diameter of container 20, to be sure aperture 34 of container 30. Fig. 2, is kept below meniscus M.

Alternatively, step 180' can be modified, when exiting from step 150 only, so that, instead of moving container 30 the remaining distance, piston 60 is reset to its initial position, e.g., position A, and sensing continues as described above, (S is reset to 1.)

Other than as noted above, the aspiration routine following liquid sensing is conventional.

As noted above, sensing for liquid penetration while container 30 continues to advance introduces additional complexities. However, although not preferred, the invention can still be practiced by repeated sensing for liquid at spaced intervals, while still moving container 30 toward the liquid. In that case, it is possible the liquid will be penetrated after a portion of the partial vacuum has already been dissipated while still in air, producing therefore a smaller negative steady-state signal response $V_2$, Fig. 4. Such value $V_2$ might be less negative than $(R-\triangle V)$. In that case, the sensing protocol should be modified to either a) use the transient value $V_1$ that exceeds the threshold $\triangle V$, or b) reduce the threshold value $\triangle V$.

In yet another alternative, the pressurizing means can be operated so as to alternate between pressurizing and aspirating, to sense whether the liquid meniscus M has been penetrated. In such an embodiment, after the reference signal is generated by piston 60 moving to position B from position A, and probe 40 has been lowered one increment of distance Y, piston 60 is returned to position A rather than being moved to position C, Fig. 2. This acts to generate a fractional partial pressure in container 30 which forces air out of aperture 34. The signal generated by transducer 70 in the case where no liquid is encountered by the expelled air is different (at a lower voltage level) than the signal that occurs when the air has to be forced out into liquid. This alternative has the advantage that piston 60 automatically resets back to position A after every other incremental advance of the probe, so that no special resetting is necessary after a large number (m) of failures to detect the interface. It has the disadvantage, however, of potentially bubbling air into the sample liquid, if the penetration occurs before the half cycle when a partial pressure, rather than a partial vacuum, is used to generate the test signal. It has been found that even a slight bubbling of air into the test liquid is unsatisfactory in certain analyses as it can alter the level of an analyte of interest.

In still another alternative embodiment, piston 60 is operated to generate only fractional partial pressures to sense for the presence of the liquid. In such an embodiment, piston 60 preferably starts at an intermediate position such as position C, and incrementally advances to position A. If the liquid is still not sensed, piston 60 is reset to the first position, say position C, or the probe is moved the remaining portion of dimension Y where it will have penetrated the liquid.

In still another alternative embodiment, the reference signal produced for comparison with the signal sensing whether penetration has occurred or not, is produced while the dispensing container has its dispensing aperture immersed in a reference liquid. The signal so produced is stored in the microprocessor and a $\triangle$V threshold is *added* thereto, to represent the signal that is indicative of the dispensing container at atmospheric pressure. That is, any signal produced that is more positive than the value produced by adding $\triangle$V, is indicative that the air-liquid interface has not yet been penetrated by the dispensing container.

It will be appreciated that the aforedescribed methods allow the detection of the penetration of the liquid by container 30, so that subsequent aspiration occurs with a minimum of exterior wetting of the container 30. This in turn minimizes the possibility of perfusion.

## Claims

1. Apparatus for aspirating and dispensing a liquid comprising:

a probe (40) for removably mounting a container (30) thereon, the container (30) having an aspirating and dispensing aperture (34);

pressurizing means (60, 62, 64) fluidly connected to said probe (40) for generating an operative pressure differential relative to atmospheric pressure within said mounted container (30);

moving means (44, 45, 48, 50) for advancing said probe (40) and said mounted container (30) toward, and away from, a nominal liquid level location (M); and

a control system (70, 80, 82);

characterized in that said control system (70, 80, 82) comprises

a) means for controlling the advance of said probe (40) so as to move repeatedly in increments, each increment being separated from the next by a period of rest,

b) means for actuating said pressurizing means (60, 62, 64) during said rest periods only to generate a pressure differential in said mounted container (30) relative to atmospheric pressure which is sufficient to indicate whether said container aperture (34) is closed by the liquid,

c) means for detecting and signalling the, pressure produced within said container (30) by said pressure differential; and

d) means for comparing the signalled pressure with a reference value determinative of the presence of liquid in said container aperture (34).

2. A method for detecting penetration of a liquid through an air-liquid interface by a dispensing container (30) of aspirating and dispensing apparatus which comprises a probe (40) for removably mounting a container (30) thereon, the container (30) having an aspirating and dispensing aperture (34); pressurizing means (60, 62, 64) fluidly connected to said probe (40) for generating an operative pressure differential relative to atmospheric pressure within said mounted container (30); moving means (44, 45, 48, 50) for advancing said probe (40) and said mounted container (30) toward, and away from, a nominal liquid level location (M); and a control system (70, 80, 82) for controlling said pressurizing means (60, 62, 64) consistent with the location of said mounted container (30);

characterized in that said method comprises the steps of

a) controlling the advance of said probe (40) to repeatedly move towards the liquid in increments, each increment being separated from the next by a period of rest,

b) actuating said pressurizing means (60, 62, 64) during said rest periods only to generate a pressure differential in said mounted container (30) relative to atmospheric pressure which is sufficient to indicate whether said container aperture (34) is closed by the liquid,

c) detecting and signalling the pressure produced within said container (30) by said pressure differential; and

d) comparing the signalled pressure with a reference value determinative of the presence of liquid in said container aperture (34).

3. A method as defined in claim 2, and further including the additional step of:

e) advancing said mounted container (30) an amount which will ensure aspiration of the liquid without air bubbles, once said comparing step d) establishes that liquid penetration has occurred.

## Patentansprüche

1. Gerät zum Ansaugen und zur Abgabe von Flüssigkeit mit einer Sonde (40), an der ein Behäiter (30) lösbar befestigt ist, der eine Ansaug- und Abgabeöffnung (34) besitzt,

einer Druckeinrichtung (60, 62, 64), die mit der Sonde (40) in Strömungsverbindung steht und in dem an der Sonde befestigten Behälter (30) einen wirksamen Druckunterschied gegenüber dem atmosphärischen Druck erzeugt,

einer Bewegungseinrichtung (44, 45, 48, 50), die die Sonde (40) und den an ihr befestigten Behälter (30) zu einer nominalen Ebene (M) des Flüssigkeitspegels hin und von diesem weg bewegt, und

einem Steuersystem (70, 80, 82),

dadurch gekennzeichnet, daß das Steuersystem (70, 80, 82) folgende Mittel enthält:

a) Mittel, die die Bewegung der Sonde (40) so steuern, daß sie sich wiederholt schrittweise bewegt, wobei zwischen den einzelnen Bewegungsschritten jeweils eine Ruhepause liegt,

b) Mittel, die die Druckeinrichtung (60, 62, 64) ausschließlich während der Ruhepausen betätigen, damit diese in dem an der Sonde befestigten Behälter (30) einen Druckunterschied gegenüber dem atmosphärischen Druck erzeugt, der ausreicht, um anzuzeigen, ob die Behälteröffnung (34) durch die Flüssigkeit verschlossen ist,

c) Mittel zum Feststellen und Anzeigen des durch den Druckunterschied in dem Behälter (30) erzeugten Drucks sowie

d) Mittel zum Vergleichen des angezeigten Druckwertes mit einem Bezugswert, der das Vorhandensein von Flüssigkeit in der Behälteröffnung (34) angibt.

2. Verfahren, mit dem festgestellt wird, ob eine Flüssigkeit durch eine von Luft und Flüssigkeit gebildete Grenzfläche hindurchgedrungen ist, wobei ein Abgabebehälter (30) eines Ansaug- und Abgabegeräts verwendet wird, das eine Sonde (40) aufweist, an der der Behälter (30) lösbar befestigt ist, und wobei der Behälter (30) eine Ansaug- und Abgabeöffnung (34) aufweist sowie eine Druckeinrichtung (60, 62, 64), die mit der Sonde (40) in Strömungsverbindung steht, um gegenüber dem atmosphärischen Druck einen wirksamen Druckunterschied in dem an der Sonde befestigten Behälter (30) zu erzeugen, eine Bewegungseinrichtung (44, 45, 48, 50), um die Sonde (40) und den an ihr befestigten Behälter (30) zu einer nominalen Ebene (M) des Flüssigkeitspegels hin und von dieser weg zu bewegen, und ein Steuersystem (70, 80, 82), das die Druckeinrichtung (60, 62, 64) entsprechend der Position des an der Sonde befestigten Behälters (30) steuert, dadurch gekennzeichnet, daß

a) die Bewegung der Sonde (40) so gesteuert wird, daß sie sich wiederholt schrittweise auf die Flüssigkeit zu bewegt, wobei zwischen den einzelnen Schritten jeweils eine Ruhepause liegt,

b) die Druckeinrichtung (60, 62, 64) ausschließlich während der Ruhepausen betätigt wird, um in dem an der Sonde befestigten Behälter (30) einen Druckunterschied gegenüber dem atmosphärischen Druck zu erzeugen, der ausreicht, um anzuzeigen, ob die Behälteröffnung (34) durch die Flüssigkeit verschlossen ist,

c) der durch den Druckunterschied im Behälter (30) erzeugte Druck festgestellt und angezeigt wird und

d) der angezeigte Druckwert mit einem Bezugswert verglichen wird, der bestimmend ist für die Anwesenheit von Flüssigkeit in der Behälteröffnung (34).

3. Verfahren nach Anspruch 2, dadurch gekennzeichnet, daß e) der an der Sonde befestigte Behälter (30) um einen Betrag verschoben wird, der gewährleistet, daß die Flüssigkeit ohne Luftblasen angesaugt wird, nachdem in der Vergleichsstufe (d) festgestellt worden ist, daß die Flüssigkeit die Luft-Flüssigkeits-Grenzfläche durchdrungen hat.

**Revendications**

1. Appareil pour aspirer et distribuer un liquide, comprenant

un embout (40) susceptible de recevoir temporairement un récipient (30) qui présente une ouverture (34) d'aspiration et de distribution;

un dispositif de modification de la pression (60, 62, 64) fluidiquement relié audit embout (40) pour engendrer, à l'intérieur dudit récipient (30), une pression de fonctionnement différente de la pression atmosphérique;

un moyen (44, 45, 48, 50) pour rapprocher ou éloigner ledit embout (40) et le récipient (30) qu'il porte d'une position (M) nominale d'un niveau de liquide; et

un dispositif de commande (70, 80, 82);

appareil caractérisé en ce que le dispositif de commande (70, 80, 82) comprend:

a) des moyens pour contrôler le déplacement dudit embout (40) de manière à le déplacer par incréments successifs séparés par une période de repos,

b) des moyens pour exciter ledit dispositif de modification de la pression (60, 62, 64) lors des périodes de repos pour engendrer, à l'intérieur du récipient (30) disposé sur l'embout (40), une pression différentielle par rapport à la pression atmosphérique juste suffisante pour indiquer si l'ouverture (34) du récipient est fermée par le liquide,

c) des moyens pour détecter et signaler la pression produite à l'intérieur dudit récipient (30) par le dispositif de modification de la pression; et

d) des moyens pour comparer la pression signalée avec une valeur de référence représentative de la présence de liquide dans l'ouverture (34) du récipient.

2. Procédé pour détecter la pénétration, au travers d'un interface air/liquide, d'un récipient (30) monté sur un appareil pour aspirer et distribuer du liquide, appareil qui comprend un embout (40) susceptible de recevoir un récipient (30) présentant une ouverture (34) d'aspiration et de distribution; un dispositif de modification de la pression (60, 62, 64) fluidiquement relié audit embout (40) pour engendrer, à l'intérieur du récipient (30), une pression de fonctionnement différente de la pression atmosphérique; un moyen (44, 45, 48, 50) pour rapprocher ou éloigner ledit embout (40) et le récipient (30) qu'il porte d'une position (M) nominale d'un niveau du liquide; et un dispositif de commande (70, 80, 82) pour controler ledit dispositif de modification de la pression (60, 62, 64) en fonction de la position dudit récipient (30); procédé caractérisé en ce qu'il comporte les étapes de:

a) contrôle de l'avance dudit embout (40) vers le liquide par incréments répétés et séparés par une phase de repos,

b) la mise en oeuvre du dispositif de modification de la pression (60, 62, 64) pendant la phase de repos pour engendrer, à l'intérieur du récipient (30) disposé sur l'embout (40), une pression différentielle par rapport à la pression atmosphérique, juste suffisante pour indiquer si l'ouverture (34) est fermée par le liquide;

c) la détection et l'indication de la pression produite à l'intérieur du récipient (30) par le dispositif de modification de la pression; et

d) la comparaison de l'indication de la pression avec une valeur de référence représentative de la présence de liquide dans l'ouverture (34) du récipient.

3. Procédé conforme à la revendication 2, comprenant l'étape supplémentaire, une fois que la comparaison de l'étape d) a permis d'établir que la pénétration de l'ouverture du récipient dans le liquide a eu lieu, de déplacer ledit récipient (30) d'une quantité qui assure que l'aspiration du liquide dans le récipient se produit sans introduction de bulle d'air dans ce même récipient.

EP 0 169 071 B1

FIG. 1

FIG. 2

**FIG. 3**

**FIG. 4**

FIG. 5